(19) Europäisches Patentamt / European Patent Office / Office européen des brevets

(11) **EP 2 699 821 B1**

(12) **EUROPEAN PATENT SPECIFICATION**

(45) Date of publication and mention of the grant of the patent:
**29.03.2017 Bulletin 2017/13**

(21) Application number: **12773959.7**

(22) Date of filing: **20.04.2012**

(51) Int Cl.:
*F16H 1/24* (2006.01)        *F03C 2/08* (2006.01)
*F04C 2/08* (2006.01)        *F16D 3/18* (2006.01)
*F16H 1/12* (2006.01)        *F16H 55/20* (2006.01)
*F16H 57/12* (2006.01)

(86) International application number:
**PCT/CA2012/050257**

(87) International publication number:
**WO 2012/142714 (26.10.2012 Gazette 2012/43)**

(54) **ROTORS FORMED USING INVOLUTE CURVES**

DURCH ABWICKLUNGSKURVEN GEFORMTE ROTOREN

ROTORS FORMÉS AU MOYEN DE COURBES INVOLUTÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.04.2011   US 201161477469 P**

(43) Date of publication of application:
**26.02.2014   Bulletin 2014/09**

(73) Proprietor: **Exponential Technologies, Inc. Calgary, Alberta T2A 2P2 (CA)**

(72) Inventors:
• **PATTERSON, Curtis**
**Calgary**
**Alberta T2C 3X8 (CA)**
• **JUAN, Alejandro**
**Calgary**
**Alberta T3C 0C6 (CA)**
• **GOTTFRIED, Kristjan**
**Vancouver**
**BC V6H 2K9 (CA)**

(74) Representative: **Boult Wade Tennant**
**Verulam Gardens**
**70 Gray's Inn Road**
**London WC1X 8BT (GB)**

(56) References cited:
**WO-A1-2011/156924      CN-Y- 201 354 837**
**US-A- 6 036 463      US-A1- 2010 074 786**

• **FIGLIOLINI ET AL: "Algorithms for involute and octoidal bevel gear generation", JOURNAL OF MECHANICAL DESIGN, A S M E INTERNATIONAL, US, vol. 127, 1 January 2005 (2005-01-01), pages 664-672, XP009093544, ISSN: 1050-0472, DOI: 10.1115/1.1900147**

EP 2 699 821 B1

**Description**

**BACKGROUND OF THE DISCLOSURE**

Field of the Disclosure

The present disclosure describes the use of involute curves for use in energy conversion devices, as well as timing or indexing gears.

US 2010/074786 A1 discloses an indexing system for a rotor assembly. The indexing system can regulate the rotational location of drive rotors that are configured to rotate about a shaft.

**SUMMARY OF THE DISCLOSURE**

According to the invention there is provided a device as defined by claim 1.

Disclosed in several embodiments is a device comprising a first rotor and a second rotor. The axes of the first rotor and the second rotor are offset from collinear and intersecting. Each of the first and the second rotor comprising: at least one lobe having a first side and a second side, wherein the first side of each lobe is a curved surface, formed of at least one spherical involute curve. The first sides of the lobes of the first rotor face the first sides of the lobes of the second rotor. The lobes of the first rotor intermesh with the lobes of the second rotor, around the periphery of the rotors.

In one form, the device described is formed wherein the first side of each lobe of the first rotor contacts the first side of associated lobes on the second rotor.

The device disclosed herein may further comprise undercuts in the first surfaces of the lobes to provide clearance for the lobe tips of the opposing rotor.

The device disclosed may be arranged wherein the second side of the lobe is a teardrop/oval shape in cross section. The teardrop surface is formed to allow proper contact with the lobe tip of the opposing rotor during rotation of the device.

The device may also be formed wherein the second side of the lobe is an offset or preload of the teardrop shape.

The rotors of the device may be formed wherein both the first sides and second sides of the lobes are comprised of involute curves.

The device may further comprise a housing having a prescribed gap between an outside diameter of the first rotor, and an inside diameter of housing.

This prescribed gap may also be provided between an outside diameter of the second rotor, and the inside diameter of housing. The device may also utilize a varying gap between the first sides of the lobes of the first rotor and the first sides of the lobes of the second rotor during rotation.

To facilitate assembly and function, the device may further comprise a shroud encompassing the first rotor, and the second rotor. The shroud is substantially in contact with the outside diameters of the first rotor and the second rotor during rotation. During operation, the shroud rotates with the first and second rotor, and; the shroud positioned within the housing.

The device may further comprise a substantially spherical ball centered at the common center of the intersection of the axis of rotation of the first and second rotors. A gap may be provided between an inner spherical surface of at least one rotor and an outer diameter of the ball.

To be used as a compressor, or expander, the device may include surfaces defining ports, where at least one rotor comprises fluid inlet and/or outlet ports that are ported through a rear face of the rotor.

Although devices with many numbers of surfaces and lobes are disclosed, one embodiment is disclosed where the number of spherical involute derived surfaces is one per lobe.

The device may be formed where lobe spherical involute curves on each rotor have a helical-like shape, where the surface spans around a rotor close to, equal to or greater than 360 degrees and result in a fluid action during rotation of the rotors that is substantially in the axial direction.

One embodiment of this variation is disclosed where the involute curves span greater than 360 degrees around the axis of the rotor, and the lobes form "fins" much like those of an auger, where both sides of the fins are comprised of involute surfaces and intended to engage fins the lobes of a mating (opposing) rotor.

In one form, the device is arranged where spherical involute lobe surfaces comprise a spiral transformation. In this embodiment, the involute curves on respective spherical planes that construct the lobe surfaces, radiate outward from a common center and reposition in an axial direction about a rotor axis. In this form, each spherical involute on each respective spherical plane may be rotated about the rotor axis by a predetermined rotation value.

In one form of the device, each of the lobes forms a gear tooth. In one form, each gear rotor comprises an equal number of teeth on each gear rotor. In one embodiment, one or more teeth of the first rotor are in contact with teeth on the opposing rotor in force transfer so as to transfer torque from the first gear rotor to the opposing gear rotor, and separate teeth on the first rotor are in contact or with prescribed gap or interference fit with teeth of the opposing rotor, to provide for backlash removal, and backlash removal and torque transfer do not occur on the same tooth of either rotor. This embodiment may be used in an assembly comprising a machine comprising a first rotating component and a second rotating component. The device may be used as a timing gear between the first rotating component and the second rotating component. The device may be formed, where gear teeth are formed with a spiral transformation.

In one form of the device, the first rotor has lobes which radiate inward toward a common origin of the spherical plane, and the number of lobes on the first rotor equals the number of lobes on the second rotor resulting in a 1:1 speed ratio between the rotors.

## BRIEF DESCRIPTION OF THE DRAWINGS

Fig. 1 is a depiction of one embodiment of an involute curve construct on the surface of a sphere.

Fig. 2 is a depiction of one embodiment of a surface defined (formed) by a series of involute curve constructs extending from the outer surface of a reference sphere toward the center of the sphere.

Fig. 3 shows one embodiment of a geometric framework for deriving the mathematics of a spherical involute curve.

Figs. 4-6 are depictions of embodiments of surfaces defined by a series of elongate involute curves.

Fig. 7 shows one embodiment of an expander at a point of maximum volume between the rotors.

Fig. 8 shows a partial cutaway view of the expander of Fig. 7 within a shroud.

Fig. 9 shows one embodiment of a plurality of pump rotors.

Fig. 10 shows the rotors of Fig. 9 in a minimum volume position.

Fig. 11 shows the rotors of Fig. 9 in a maximum volume position.

Fig. 12shows one embodiment of a single lobe involute compressor using two pairs of rotors in a housing.

Fig. 13 shows one embodiment of a single lobe involute compressor at a point of maximum volume.

Fig. 14 shows one embodiment of a single lobe involute compressor near the point of maximum volume.

Fig. 15 shows one embodiment of a single lobe involute compressor of Fig. 14 from another viewing angle.

Fig. 16 shows one embodiment of a single lobe involute compressor near a point of minimum volume.

Fig. 17 shows one embodiment of a single lobe involute compressor substantially at a point of minimum volume.

Fig. 18 shows one embodiment of a single lobe involute compressor near a point of minimum volume.

Figs. 19A-19B show one embodiment of a spiral involute single lobe teardrop rotor.

Fig. 20 shows surfaces of one embodiment of a six-tooth oval ear involute sawtooth rotor assembly.

Fig. 22 shows surfaces of one embodiment of a twelve-tooth oval ear involute sawtooth rotor assembly.

Fig. 22B shows a detail view of the area B of Fig. 22

Fig. 23 shows the engagement surfaces of an embodiment of timing gears that may be designed for minimal backlash.

Fig. 24 shows the engagement surfaces of a twelve-lobe embodiment of timing gears that may be designed for minimal backlash.

Fig. 24B shows a side view of the embodiments of Fig. 24.

Fig. 25 shows the surfaces of a four lobe embodiment.

Fig. 25B shows a side view of the embodiment of Fig. 25.

Fig. 26 shows a ten lobe embodiment with 12º beveled gears.

Fig. 27 shows the engagement surfaces of an eleven lobe embodiment with 10º involute gears.

Fig. 28 shows a twelve lobed embodiment.

Fig. 29 shows the surfaces of a six-lobed embodiment with wider lobes than that shown in other embodiments.

Figs. 30 and 31 show a spherical involute elongate spiral transformation embodiment of the two rotor surfaces in contact.

Fig. 32 shows a prior art rotor and shaft.

Fig 33 shows a detail cross sectional view of part of a rotor.

## DESCRIPTION OF THE PREFERRED EMBODIMENTS

When a straight line rolls along a stationary circle a point on the line traces a curve called an involute (of the circle). When a circle rolls along a stationary straight line a point on the circumference of the circle traces a curve called a cycloid. When a circle rolls along another circle then a point on the circumference of the rolling circle traces out a curve called an epicycloid (if the rolling circle rolls on the outside of the stationary circle) or a hypocycloid (if the rolling circle rolls on the inside of the stationary circle). In all these cases of rolling circles points not on the circumference trace curves called trochoids.

All of the curves described above involve straight lines and circles in the plane. However, the same things can be applied to a sphere. The curves on a sphere that correspond to straight lines are the great circles (circles that divide the sphere into two equal halves) because great circles have the same symmetries on the spherical surface as do straight lines on the plane. On a sphere the "straight" lines are also circles. A circle on a spherical surface forms a cone from the center of the sphere; in the case of a great circle this cone is actually a planar disk. These cones and discs may be used to produce on a sphere the rolling of circles on circles.

The involute form has many advantages including close approximation to a rolling contact when two involutes are in synchronous rotating contact with one another when the central axis of the base cones of the involutes are offset from collinear. In this disclosure, an involute curve is defined as the curve described by the free end of a thread as it is wound around another curve, the evolute, such that its normals are tangential to the evolute.

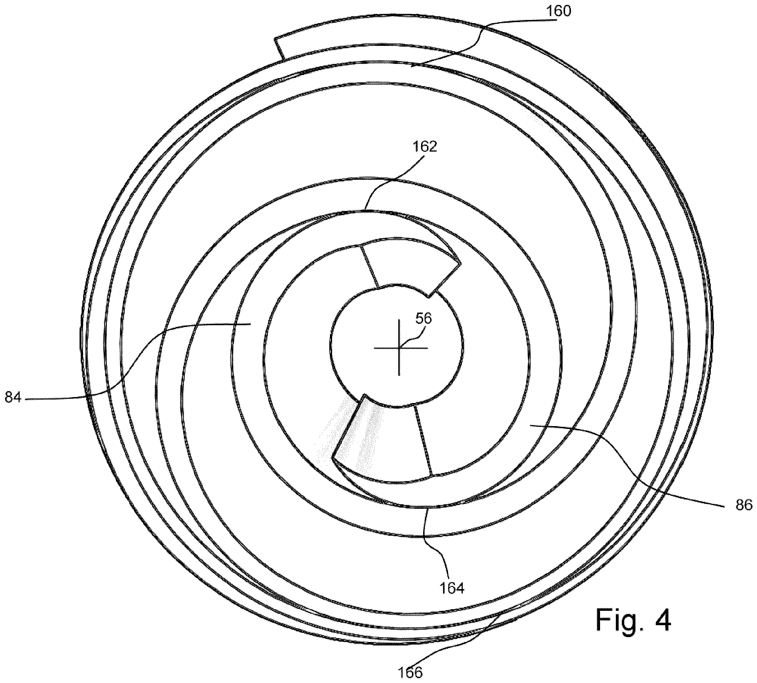

This disclosure presents several uses of involutes for use in energy conversion devices" as well as the use of the spherical involute curves used as timing gears for rotors with axes that are offset from collinear, or rather, used in indexers as described for example in patent application serial number 12/560,674 ('674). Further, machines used for energy conversion may also be formed whereby the entire set of primary contacting surfaces are comprised completely of spherical involute curves operating with axis offset from collinear and approximately intersect such as those illustrated in Figs. 4-6. In these particular Figs. a suitable "shroud" on the outside, as well as a suitable inner ball with gap or contacting seals, are not always shown. US patent application 13/162436 ('436) discloses similar shrouds in some detail. However, if one were to synchronously rotate the two rotors composed of spherical involute geometry, you obtain a fluid motion that generally propagates in the axial direction 56 of the rotors, similar to a screw compressor. The sawtooth lobe shape energy conversion device is also disclosed, where a teardrop geometry is created utilizing the bifurcation plane of the rotors as the cutter locations, is very similar to the energy conversion device lobe shown in patent 6,036,463 ('463).

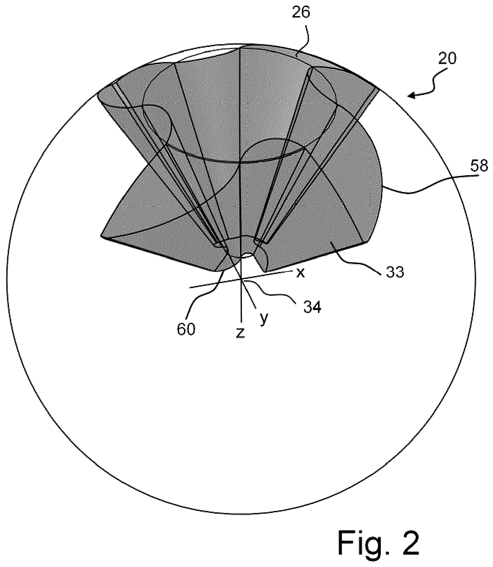

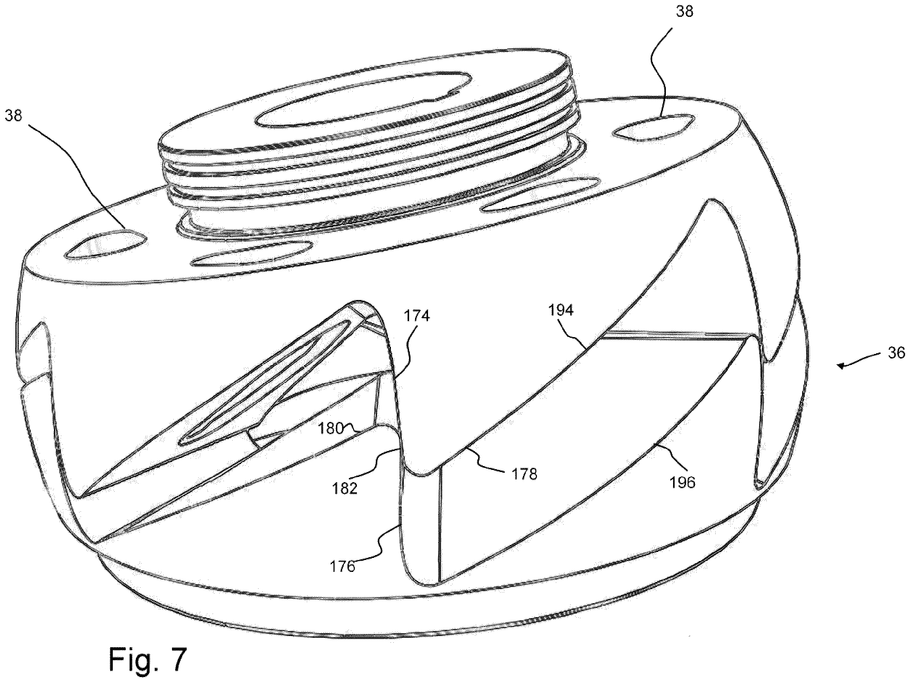

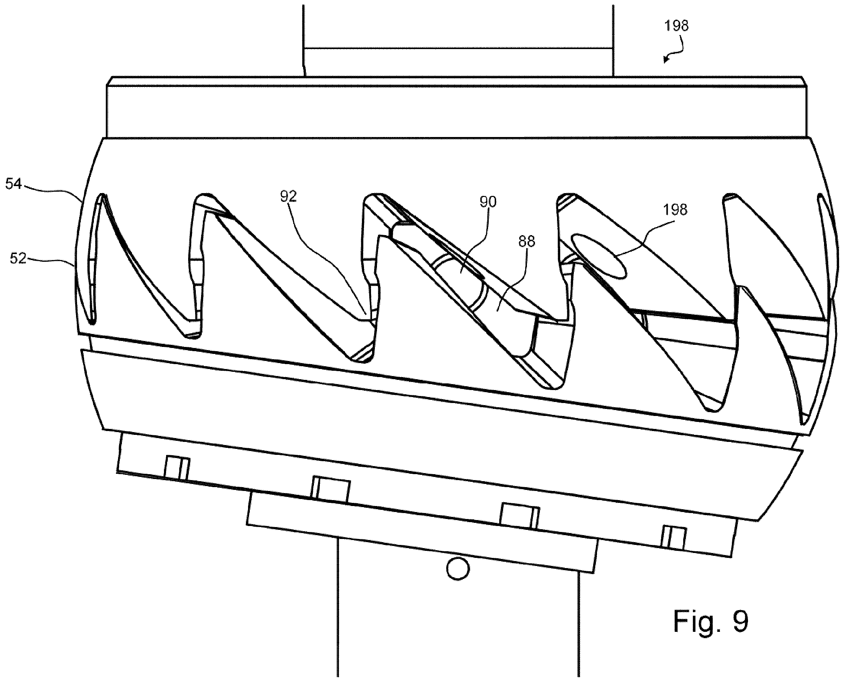

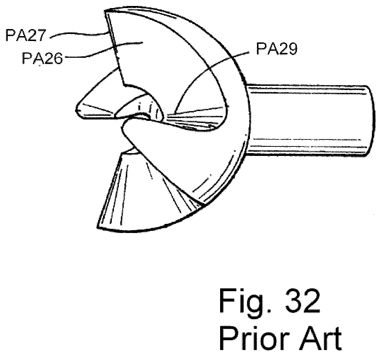

The term "teardrop" is used herein as a portion of a curve created by the radially outward edge of a teardrop shape, bisected by a plane passing through the long axis of the teardrop. The teardrop lies on the surface of a spherical plane. However, using Fig. 7A from the '463 patent as an illustration, currently presented as Fig. 32, a surface similar to that of surface PA26 may be formed using a novel method that improves contact and load transfer. In the previous method, surface PA26 was formed by connecting the edge of the lobe tips PA27 to the edge of the lobe root PA29. In the improved method, the surface is formed by connecting the edge of the lobe tips PA27 to the edge of the lobe root PA29 with a spherical involute curve surface. This spherical involute curve surface is created by a plurality of spherical involute curves. Using Fig. 2 of this disclosure as an example, a first spherical involute curve 58 lies on an outer spherical plane corresponding to the outside diameter of the rotor. A second spherical involute 60 lies on the spherical plane corresponding to an inner ball 88, or hollow center of the rotor as shown in Fig. 9. The first 58 and second 60 involute curves need not be radial projections of the other; rather, they may have different pitches for example. The first 58 and second 60 involutes may be connected in one embodiment by a connecting surface 33. This connecting surface 33 in one form can be conceived as being composed of an infinite number of involute curves that lie on an infinite number of concentric spherical planes, and that the parameters that describe each of these infinite spherical involutes have some smooth progression from outer curve 58 to inner curve 60. The mating rotor in one form may also have surfaces with a similar smooth progression, such that the involute curve surfaces on a first rotor mesh with the involute curve surfaces of the mating rotor.

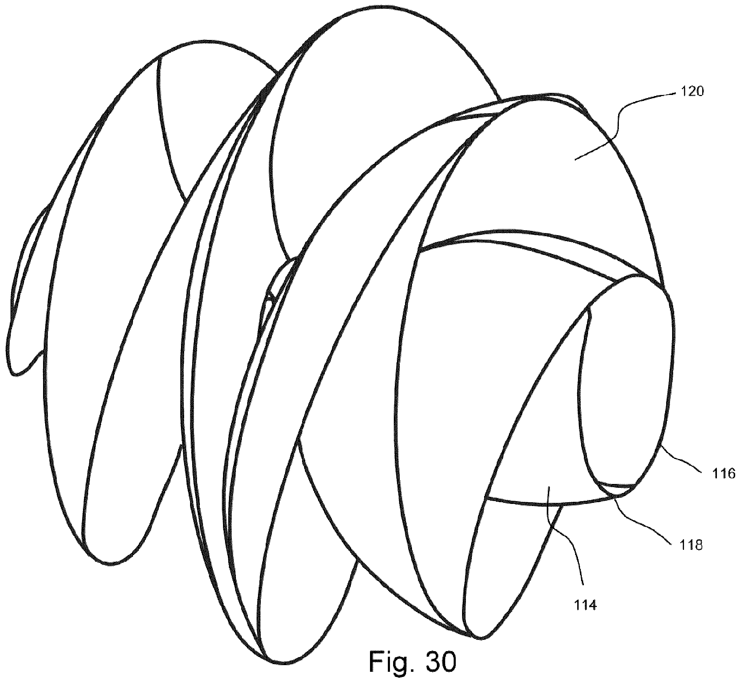

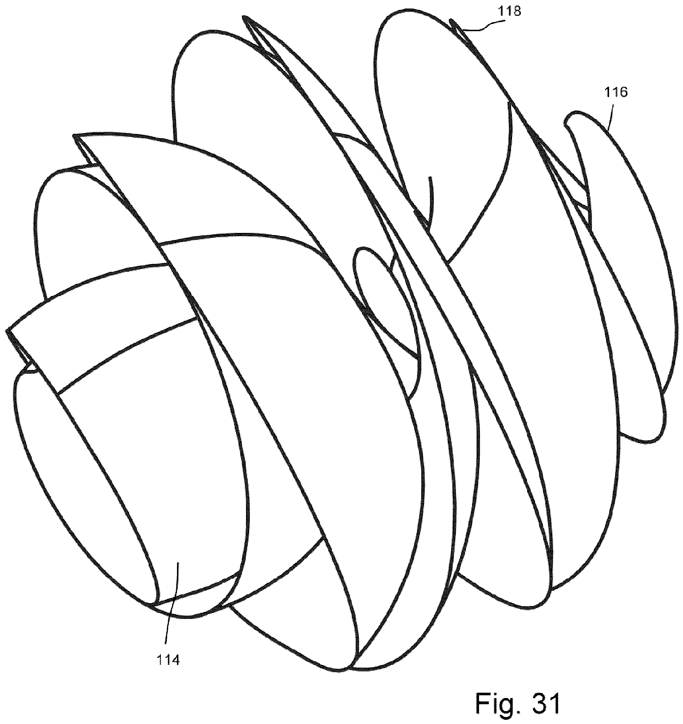

A spiral transformation could also be applied such that each of this infinite number of involute curves can be clocked by some tangential amount such as shown in the embodiments of Figures 30 and 31, smoothly, to create a spiral involute surface 114 on each rotor 116/118. Benefits of a spiral involute geometry are analogous to that of a spiral bevel gear, such as reducing machine noise, and increasing contact ratio and strength. It is also disclosed to construct a spiral spherical involute rotor that has greater than a full spiral twist, such a rotor could be used to create a device (pump, compressor, or engine) with an improved radial flow characteristic, where fluid volumes could be trapped by the spiral chambers resulting in a radial-flow device, that is, fluid flow could start from an inlet at the outside diameter of the rotors 116/118, become trapped (compressed/expanded) by the rotors as they rotate, and the flow could be directed toward the center of the rotors radially, through the spiral volumes 120. The opposite direction of flow could also occur by changing the spiral direction (shape of the rotors), or changing the direction of rotation of the rotors.

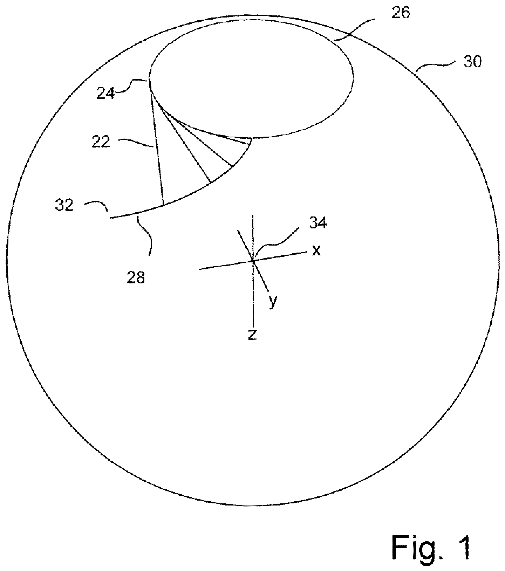

On particular form of an involute curve is a spherical involute 20 which may be conceived as the set of points traversed by the tip of a string, as one unwraps a string from a circle upon the surface of a sphere while keeping it pulled tight, the circle being inscribed on the surface of a sphere. Fig. 1 illustrates this concept, where point 32 is the tip of the string 22, and points along the spherical involute curve 28 are created by the taught string 22 at various positions of being unwrapped. In one form, the string 22 forms a point of tangency 24 with the base circle 26. In one form, the string 22 is not a straight line, but rather, a great circle (a circle with center at sphere origin 34). Fig. 2 with spherical involute curve 28 illustrates a possible design for bevel-gear like timing gear that could be used in an energy conversion device with a through-shaft design for rotors that are offset from collinear.

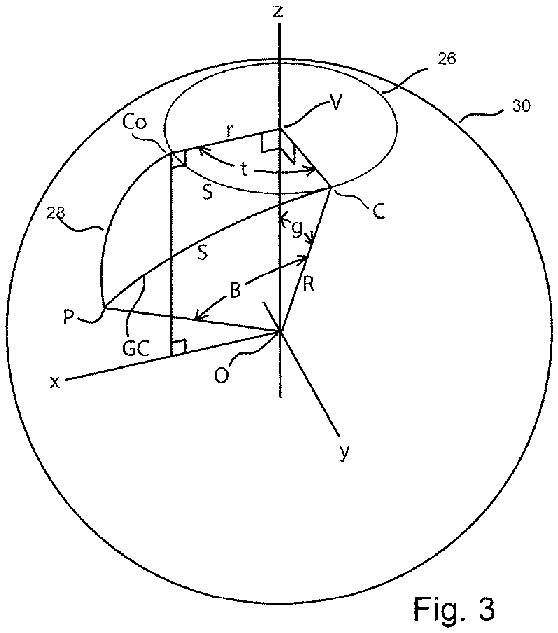

To derive a mathematical construct of the spherical involute shape, one method is to use a series of vector rotations about a common center point. Fig. 3 illustrates this mathematical construct, with the assumption that the "string" being unwound starts being unwound at a point Co, aligned with the x-axis, and unraveling occurs in the counterclockwise direction, or rather, in a positive rotational direction about the z-axis by the right-hand-rule. Let "t" represent the angular position of the tangent point C located on the base circle. This tangent point traverses the base circle in a counter clockwise direction as point P of string GC is pulled off of the base circle. The arc length of great circle "GC" is equal to the arc length of the circular arc of the base circle between points Co and C and is denoted by S. Using the base circle 26, the arc length S = rt, where r is the radius of the base circle 26, t is the tangent point angle shown in Fig. 3. The half-angle of the base cone, as "g" is illustrated in Fig. 3, where the right triangle O V C demonstrates g = asin(r/R) which can be rewritten as r=Rsin(g) or r/R=sin(g), where R is the radius of the spherical plane of the involute. For spherical triangle P C O, we can write a relation S=RB, that is, angle B multiplied by radius R equals arc length S. Combine S=rt with S=RB to obtain rt=RB or r/R=B/t.. For convenience, it is disclosed in one embodiment to write angle B in terms of g. To accomplish this, substitute r/R=B/t into g = asin(r/R), thus B = tsin(g). A series of vector rotations in x y z Cartesian coordinates about the common center O illustrated in Fig. 3 can now be performed in a series of steps. First, rotate vector V=[0,0,R] by +B about the x-axis using the right hand rule. Second, rotate this result by +g about the y-axis. Third, rotate this second result by angle "t" about the z-axis. Below are the series of matrix rotations and resulting parametric equation for a spherical involute in Cartesian coordinates:

$$
Involute = \begin{bmatrix} \cos(t) & -\sin(t) & 0 \\ \sin(t) & \cos(t) & 0 \\ 0 & 0 & 1 \end{bmatrix} \begin{bmatrix} \cos(g) & 0 & \sin(g) \\ 0 & 1 & 0 \\ -\sin(g) & 0 & \cos(g) \end{bmatrix} \begin{bmatrix} 1 & 0 & 0 \\ 0 & \cos(B) & -\sin(B) \\ 0 & \sin(B) & \cos(B) \end{bmatrix} \begin{bmatrix} 0 \\ 0 \\ R \end{bmatrix}
$$

$$
Involute = \begin{bmatrix} X(t) \\ Y(t) \\ Z(t) \end{bmatrix} = \begin{bmatrix} R\{\sin(tsin(g))\sin(t) + \cos(tsin(g))\cos(t)\sin(g)\} \\ R\{\cos(tsin(g))\sin(g)\sin(t) - \sin(tsin(g))\cos(t)\} \\ R\{\cos(tsin(g))\cos(g)\} \end{bmatrix}
$$

Where g = asin(r/R), r being the radius of base circle 26 in Fig. 3 and R being the radius of the spherical plane 30 in which the spherical involute lies.

A spherical involute curve in one form may span the space between two reference points on a sphere of radius R. One simply needs to apply an arbitrary rotation of the spherical involute curve about the z-axis in order to position the spherical involute curve accordingly. The base circle radius may be adjusted to control the "pitch" or slope of the involute curve. The angular position "t" controls the starting and ending points of the involute. A range of t values may be selected to precisely control the end points of the involute curve. There are limitations on the points that can be joined with a spherical involute. For example, end points P of the involute curve cannot lie outside of two base circles inscribed on the sphere, base circles centered on the z-axis and mirrored about the x-y plane. For points that lie between these base circles it is possible to connect some points with a spherical involute curve. One may also satisfy any tangency conditions at both points. For example, referring to Fig. 32, to produce an involute curve surface lobe instead of the lobe shown, a first point could be defined as the location where edge PA27 intersects the spherical plane at one end, and the involute curve could be made to also pass through the point where edge PA29 intersects the spherical plane. One will then discard the rest of the involute curve, using only the segment that connects the two points. Tangency conditions could also be met such that the involute curve smoothly transitions from lobe tip end curves, or smoothly transitions at a root between two lobes.

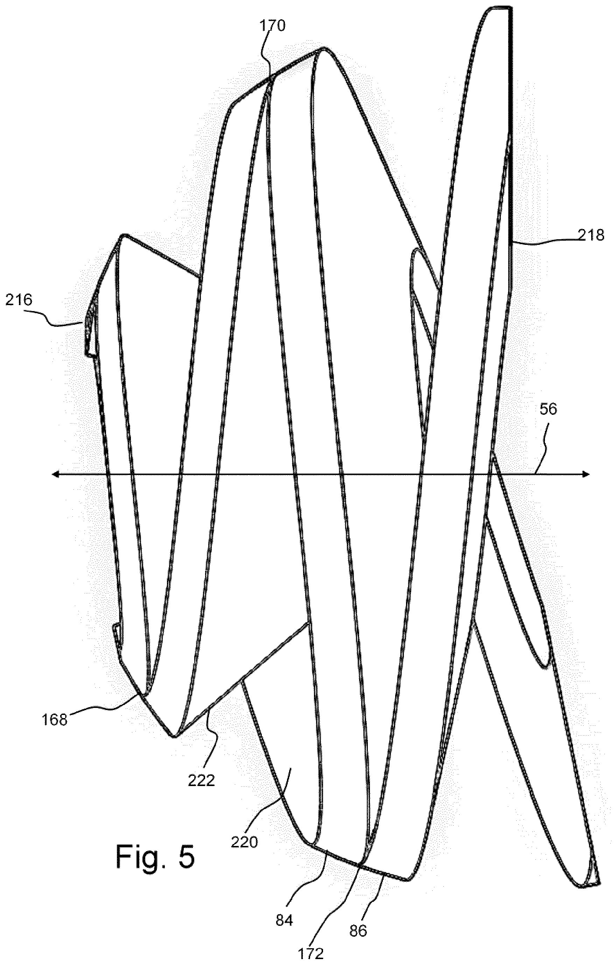

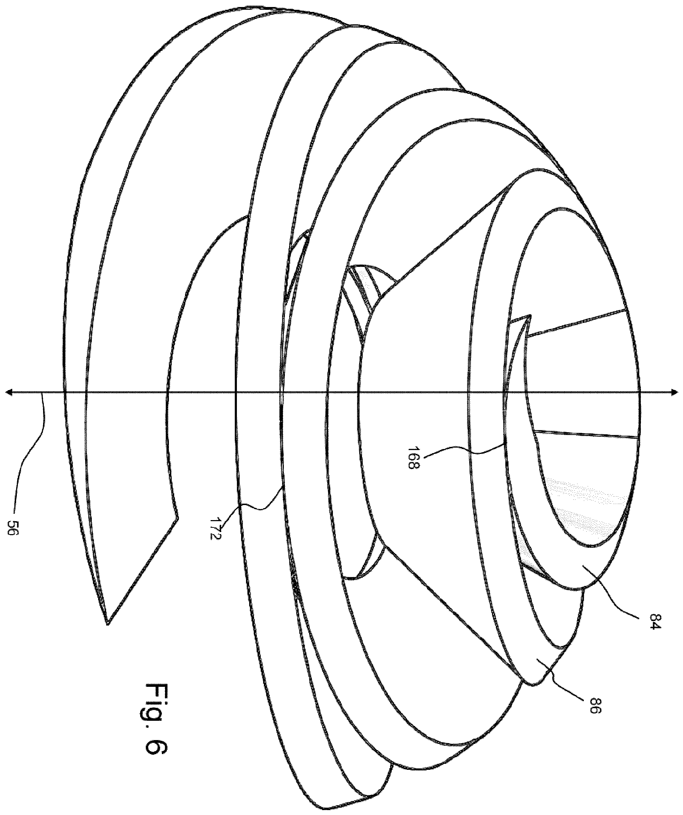

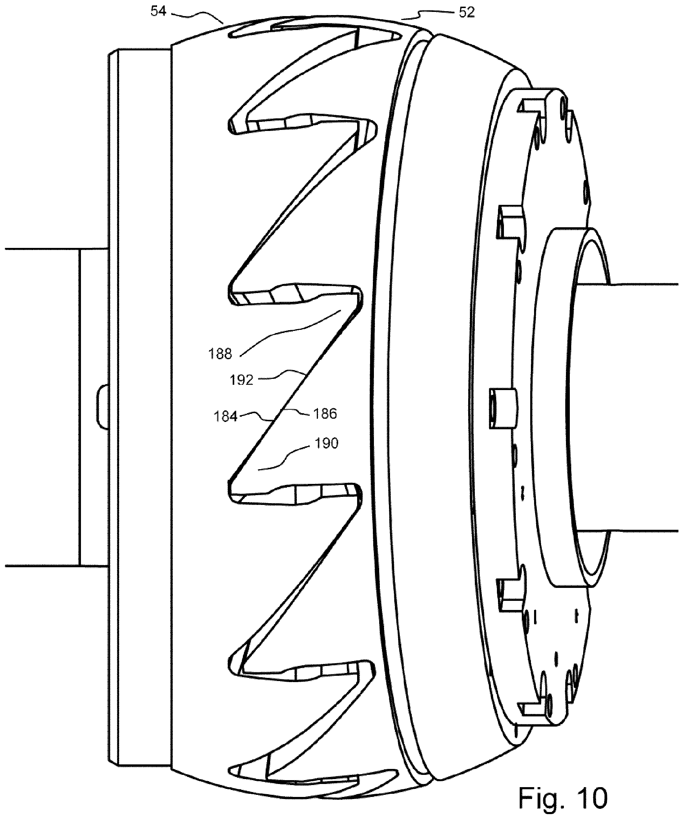

The use of the spherical involute has been found to allow much improved load transfer between rotors through the improved rolling contact between involute surfaces. In the example of Fig. 4, the rotors are shown contacting at contact points 160, 162, 164, and 166. In Figs. 5 and 6 the rotors are contacting at points 168, 170, and 172.In the embodiment of Fig. 7, the teardrop surfaces 174 and 176 of the lobes 178 and 180 respectively, are shown contacting at point 182. In this embodiment, point 182 is a rubbing, or frictional contact point, and not a rolling contact point as the rotors rotate about their respective axes. In the embodiment of Fig. 10, the involute curve surfaces 184 and 186 of lobes 188 and 190 respectively are in rolling contact at point 192 as the rotors rotate about their respective axes. The lobes can be designed in such a way that multiple lobes can have involute to involute contact (as shown in Fig. 10), which further increases load carrying capacity. Adding a spiral transformation can further increase the number of lobes that are in contact.

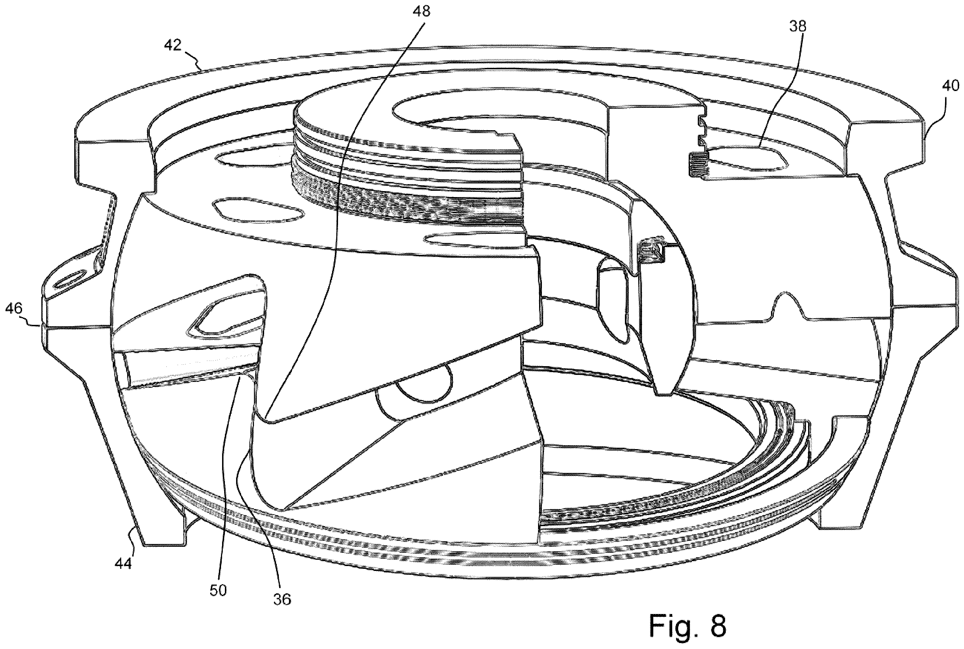

Figs. 7 and 8 illustrate the use of the involute surfaces 194, 196 in a sawtooth pattern 36 alternating with teardrop geometry surfaces 174, 176, used in this case as a gas expander with rear porting 38 and a shroud 40 which in this embodiment comprises a first section 42 and a second section 44 divided at a split 46. The involute base circle diameters are adjusted to create spherical involutes that are precisely tangent to both the lobe tips 48, 50 which in this embodiment are conical rabbit ears, as well as precise tangency at the roots of the lobes.

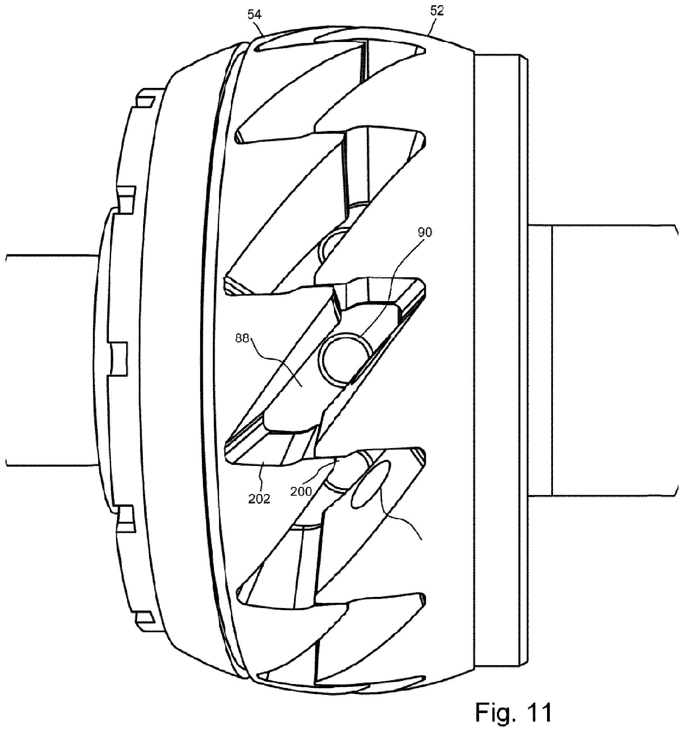

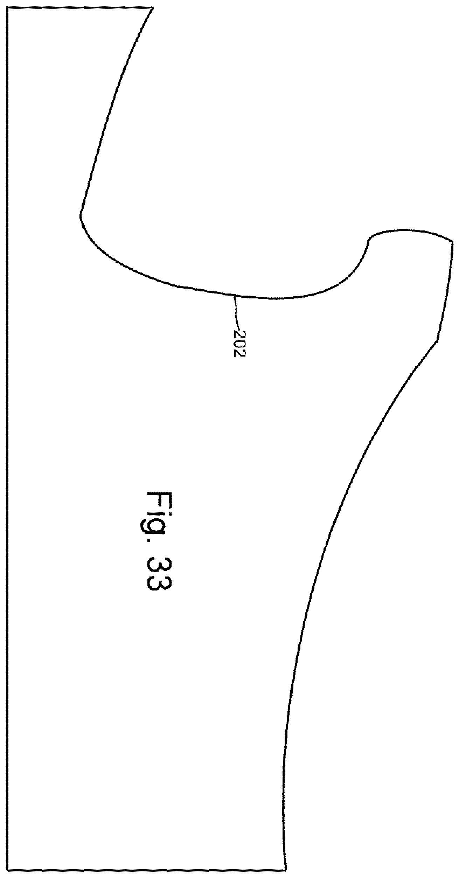

Figs. 9-11 illustrate the use of the involute curve with rotors 52/54 having shapes similar to teardrop shapes alternating, in a pump rotor embodiment, to be used with a shroud (not shown) and rear porting through surfaces defining ports 198. In Fig. 11 it is also shown some circular flats 90 machined onto the ball 88, to allow for easy assembly of the rotors over the ball. With such flats or recesses, it is not required to "snap" the rotors 52, 54 over the ball 88 and not necessary to have special removable sleeves to allow for the overhang assembly compensation. While circular flats are shown, the machined detents need not be circular, nor need they be flat. The detents provide clearance for the rotors to pass thereby such that the central spherical surface of one rotor contacts the ball 88, and the opposing rotor has a predefined clearance gap or positive seal with ball 88. In these Figs., it is shown that there may be clearance seals formed at minimum volume by the involute-to-involute clearance (which may also be designed as a contact if so desired and optionally for torque transfer), and clearance seal at the lobe tips 92 at the maximum volume position shown in Fig. 11. In this particular embodiment the lobe tips 200 are not constructed from circular or conical tips but rather out of flats, or very thin ovals, whereby the sealing gap is long and thin, providing a better lobe-to-lobe seal as the pressure drop through a long thin gap is greater than a shorter gap of the conical lobe tip type. There are no intermediate sealing required for the lobe-to-lobe seals between min and max volume, hence the "undercuts" 202 that are shown rather than the teardrop profile shown in Fig. 7. This embodiment may be utilized when internal compression is not desired. Since a liquid is relatively incompressible, the device would not operate correctly with internal compression when pumping oil or water for example. Fig. 33 shows one example of such an undercut 202.

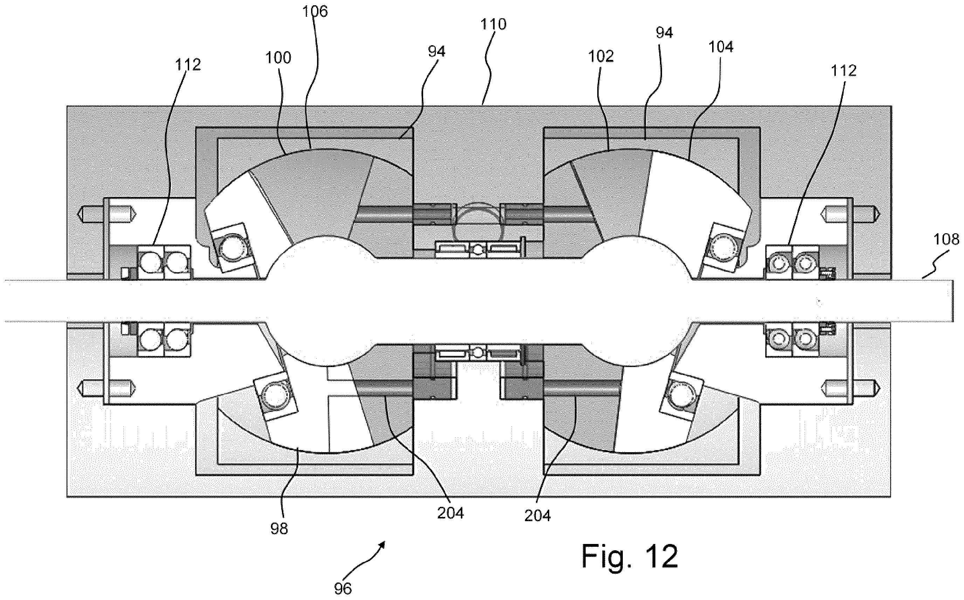

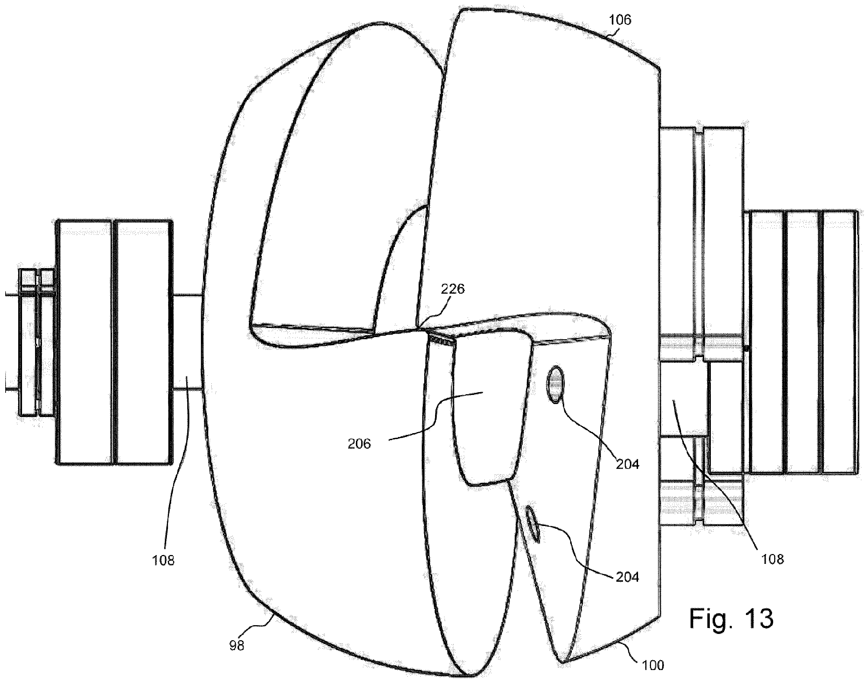

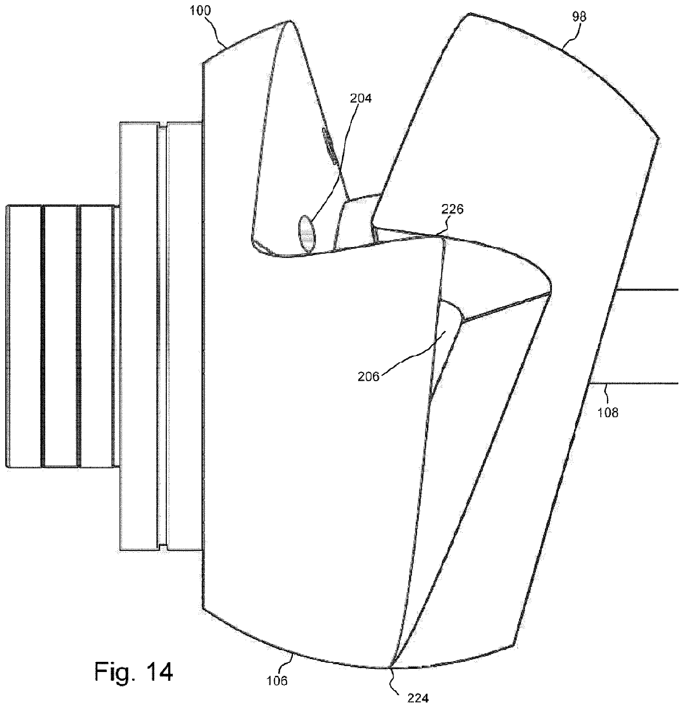

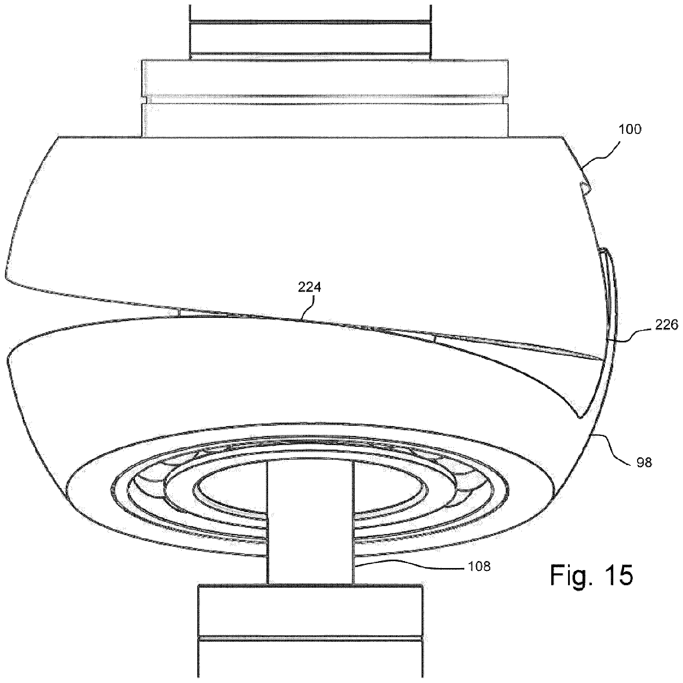

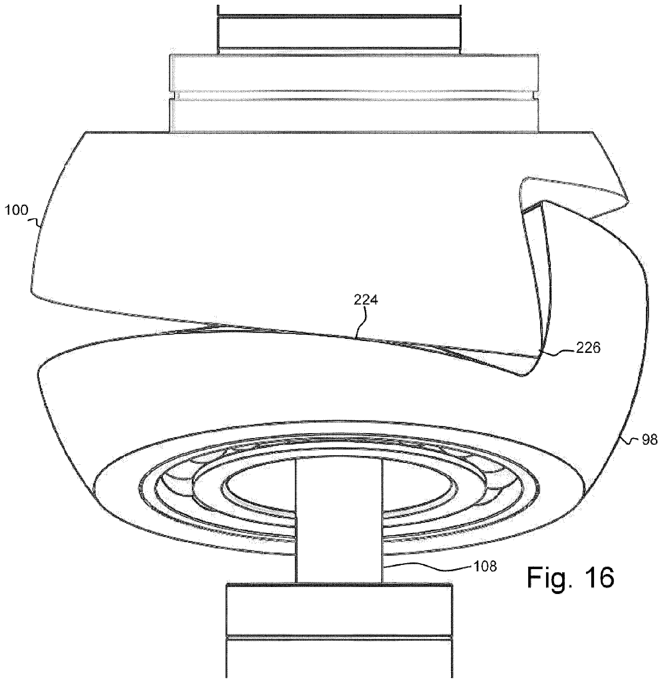

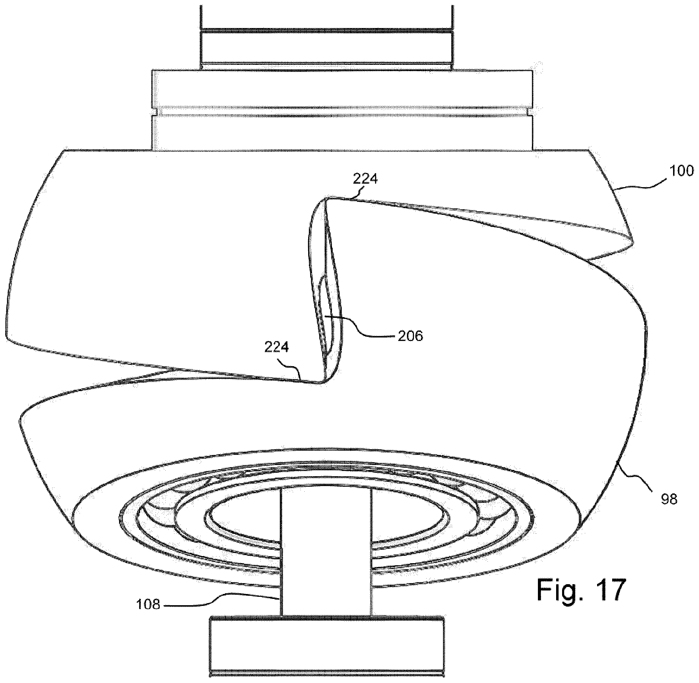

Figs. 12-18 illustrate an example of a single-lobe spherical involute energy conversion device 96 that could be used to convert energy. This embodiment in one form can be rear ported through surfaces defining voids 204. In one form, a shroud 94 may be utilized. This embodiment has useful advantages, such as having almost zero recirculated (or clearance) volume at the point of minimum volume as shown in Fig. 17, resulting in extremely high compression ratio if desired. Fig. 13 shows a point of maximum volume during rotation, and Figs 14, 15, and 18 show points of intermediate volume during rotation. The rotors 98/100 in this embodiment are not necessarily rotationally balanced, but could easily be balanced by removing material around the outside diameter 106 of the rotors appropriately.

In this embodiment, two pairs of rotors 98/100 and 102/104 are shown attached to a single shaft 108 within a housing 110 which may comprise a ball portion 206 similar to that previously disclosed. Bearing sets 112 may be used to properly align the shaft, and to reduce friction between the shaft and the housing.

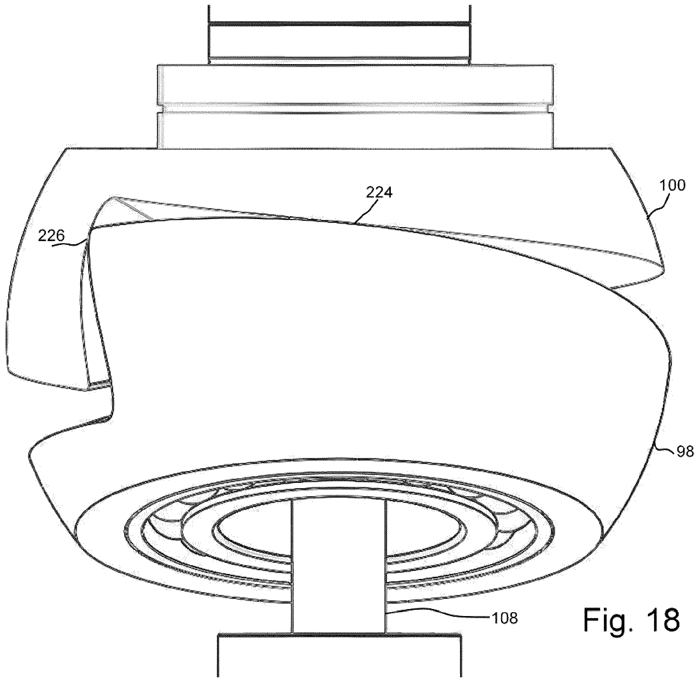

As shown, there is a point 224 of substantially rolling contact between the axial surfaces of the rotors, and a point 226 of substantially sliding, contact when the radial surfaces of the rotors contact as shown for example in Fig. 18.

Figures 13-18 show a rotor assembly comprising a first rotor 98 and a second rotor 100. The first rotor has a first axis of rotation about the shaft 108, with an engagement spherical curve positioned in a spherical plane where the first rotor's engagement curve is defined by a plurality of points. Each point has an associated position derivative vector indicating a direction of tangency to the first rotor's engagement curve. Relative motion vectors at each point along the first rotor's engagement curve, the relative motion vectors defined as the motion vectors of each point on the first rotor's engagement curve measured with respect to a coordinate system rigidly fixed to the second rotor 100, where the relative motion vectors are dependent on the relative rotational positions of the first rotor with respect to the second rotor.

The second rotor has a center rotation axis about shaft 108 that is offset from co-linear to the axis of the first rotor. The second rotor rotates at a prescribed rotational speed with respect to the first rotor. Furthermore, the second rotor has a second engagement surface with a second set of engagement spherical curves positioned in the spherical planes of the second rotor where the plurality of points forming the second rotor's engagement curve are measured on a coordinate system rigidly fixed to the second rotor. Each point of this plurality of points corresponds to a specific rotational position of the two rotors. Each point created at the geometric location where one of the first rotor curve position derivate vectors is co-linear with one of the first rotor curve relative motion vectors, where the first and second rotor curves lie on equal diameter spherical planes, and further where the coordinates of the position derivative vectors and the relative motion vectors are the same defines a reference point and the locus of these points on any given spherical plane determines the second rotor's engagement curves on a spherical plane shared by the two rotors. This construct defines a teardrop surface 244 on each rotor, such that contact between the rotors at the teardrop surface has substantially zero clearance. In the single lobe embodiment of these Figs. In this embodiment, an involute curve surface 246 connects the base 248 of a teardrop surface 244 of the lobe to the tip 226 of the lobe.

In more simple terms, in one embodiment, as the tip of one rotor rotates about an axis that is offset from collinear from an axis of an opposing rotor, the lobe tips of the first rotor scribe a teardrop shape in the opposing rotor in the case of Figures 13-18, however depending on the location of the lobe tip and shape of the lobe tips, the scribed shape may not be a teardrop, but rather a more oval shape or other shape which results from the mathematics described in the previous paragraphs.

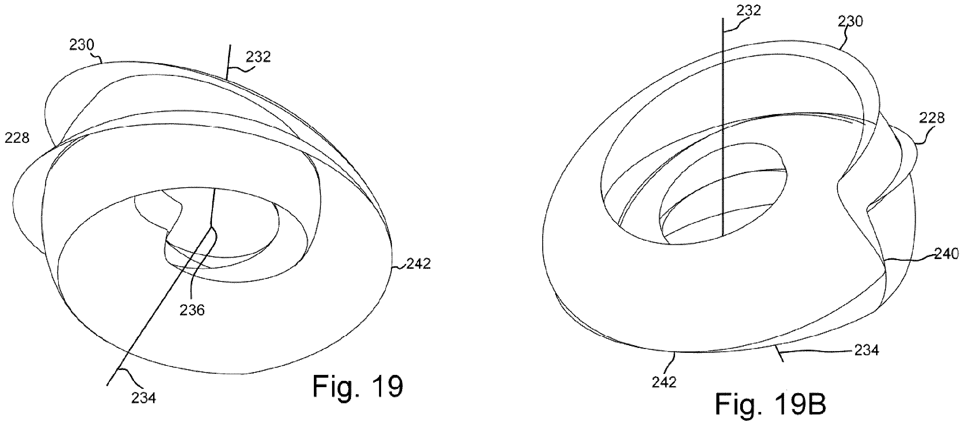

A spiral transformation could be applied to the surfaces to create a radial flow device, such as the device shown in Fig. 19, and 19B. In this embodiment, each rotor 228, 230 rotates about an axis 232, 234 respectively, and the axes are not collinear, not coplanar, and commonly intersect at a point 236. As with the previous embodiment, the rotors contact at moving points 240 and 242, where contact at point 240 is substantially a frictional contact, and contact at point 242 is substantially a rolling contact.

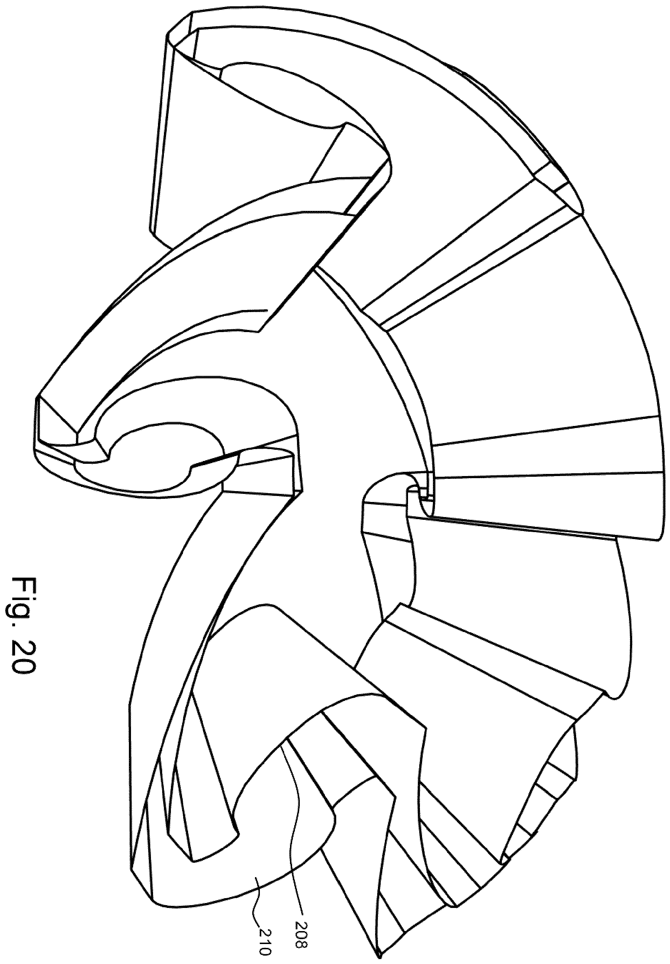

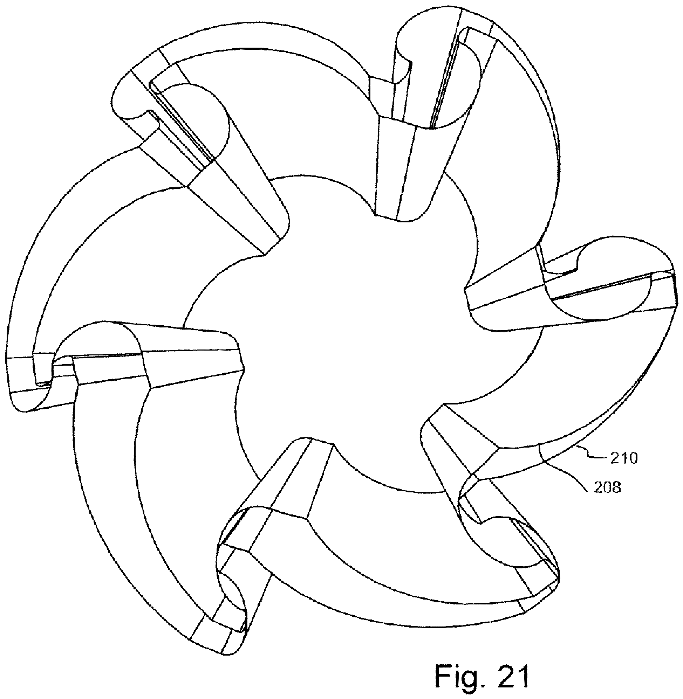

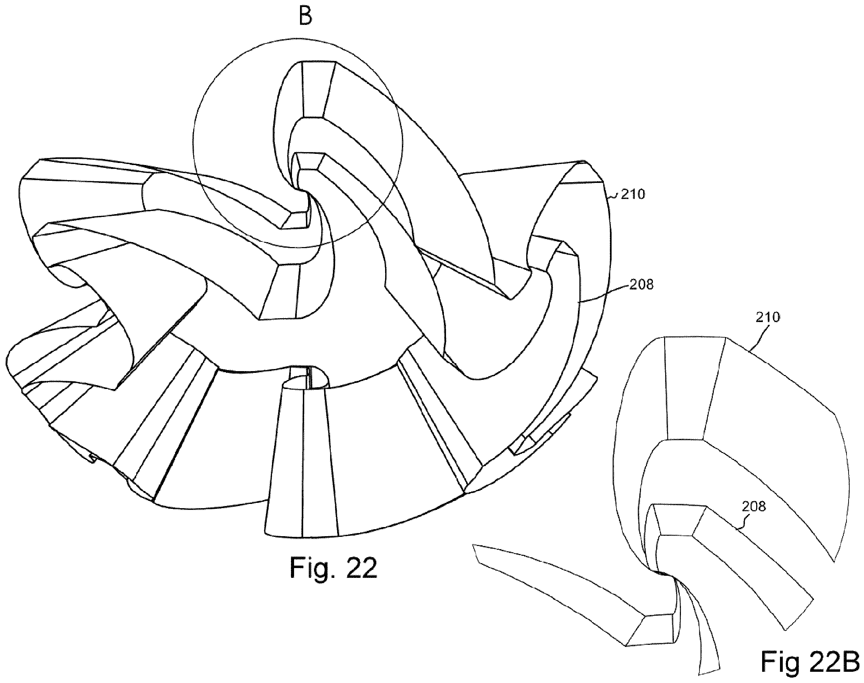

There is shown surfaces offset away from the bifurcation plane, and illustrate the spherical involute used in conjunction with oval surfaces, whereby half of the lobes are now involutes, and the lobe tips are formed using very thin ovals. The thin long oval tips allows for a thicker lobe, adding extra strength. Figs. 20, 21, and 22 show lobes having flat, oval rabbit ears. The resultant lobes are relatively thick as a result of the flat rabbit ear design.

The surfaces 208, 210 illustrated in Fig. 20 could be used for a compressor or expander or other energy conversion devices, with or without a shroud and could have the lobes rear ported as well. However, one could also use these surfaces to form the geometry of timing gears or "indexers" with a controlled backlash. For example, the embodiment shown in Fig. 20 could be for example a direct replacement for the indexers shown in the '674 patent application Fig. 13 items 132 and 158, since the embodiment shown in one form operates at a 1:1 speed ratio. An additional spiral transformation could be applied to the design shown in Fig. 20 much like in the '674 patent application's Figures 68A-68C to improve smooth running operation. Note that an indexer such as this could also serve a dual purpose, for example, since it would likely run with oil lubrication, it could also serve as an oil pump, or a secondary energy conversion device.

In gearing, when the direction of load of the driving gear is reversed, backlash is often described as the clearance gap that exists between two sets of gear teeth that must become closed before the force from the reversed driving gear is experienced by the driven gear. It is also referred to as the lash or play. For timing gears in machines that require very accurate motion it is important that the backlash be minimal. Backlash can be designed for a specific clearance gap, or utilizes split gears and springs, a zero backlash with a preload can be accomplished as well.

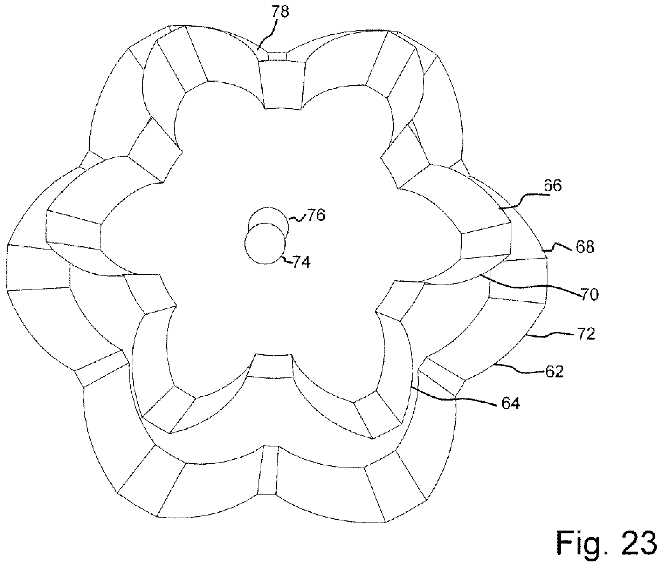

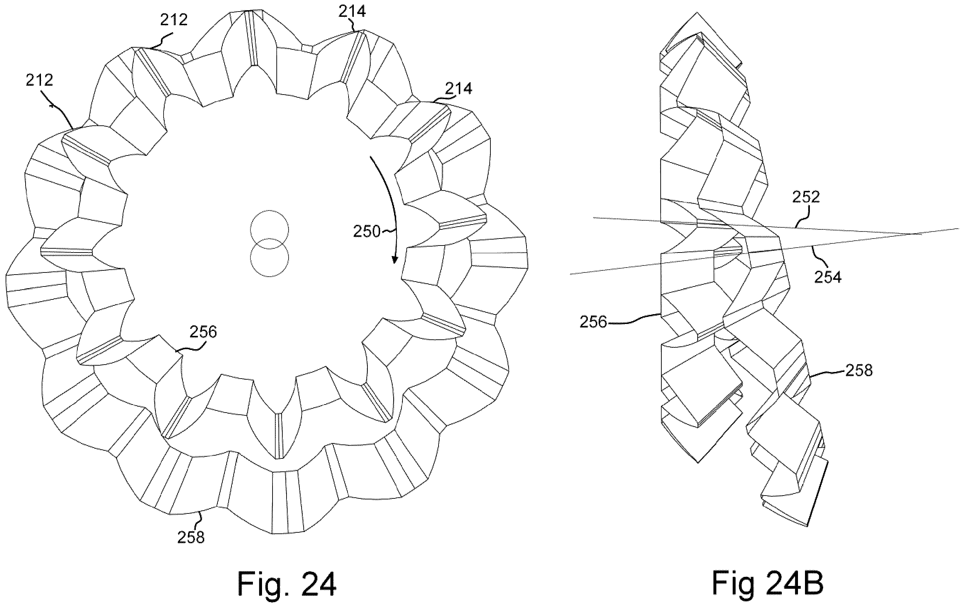

Figs. 23 and 24 illustrate timing gears 62/64 that may be designed for minimal backlash. These gears are not designed to take significant thrust load, but would rather be for torque transfer. In these two figures, the timing gears 62/64 have different pitch diameters 70/72, yet the number of teeth 66/68 on each gear is equal which is counter intuitive. By having the same number of teeth, an energy conversion device with a 1:1 speed ratio may be produced with indexing gears such as these. In an energy conversion device indexing arrangement requiring unequal speed ratios such as the indexers shown in the '674 patent application's Figures 68A-68D, an unequal number of gear teeth may be used to create the required speed ratio. The indexers (timing gears) that use spherical involute curves may operate at equal or non-equal speed ratios about shafts 74/76. The indexers may or may not have backlash control. For these energy conversion devices, backlash control may not be necessary all of the time, since often the torque is high enough in a single direction, that the fluid pressure can keep the clearance gaps 78 between rotors constant. Or, one can imagine that the torque at the drive shaft end would be generally high enough that at the point of minimum clearance, the involute timing gears would maintain contact with the opposing gear. In another embodiment, contact would be made substantially all the time, so as not to cause performance issues.

Backlash is usually mitigated by use of a single tooth that is wide enough such that both sides of the one tooth are in close proximity or contacting the opposite gear. In the embodiment of Fig. 24, the backlash is actually removed several teeth apart, or rather, the torque transmitting contact occurs at point(s) 212, 1 or 2 teeth away from the backlash removing point(s) 214 as the rotor surfaces 256 and 258 travel in rotational direction 250 about axes 252 and 254. The teeth providing for backlash removal at points 214, control or mitigate rotation of the rotor surface 256 in a direction opposite that shown by arrow 250, relative to the rotor surface 258. Such reverse relative rotation is defined as backlash.

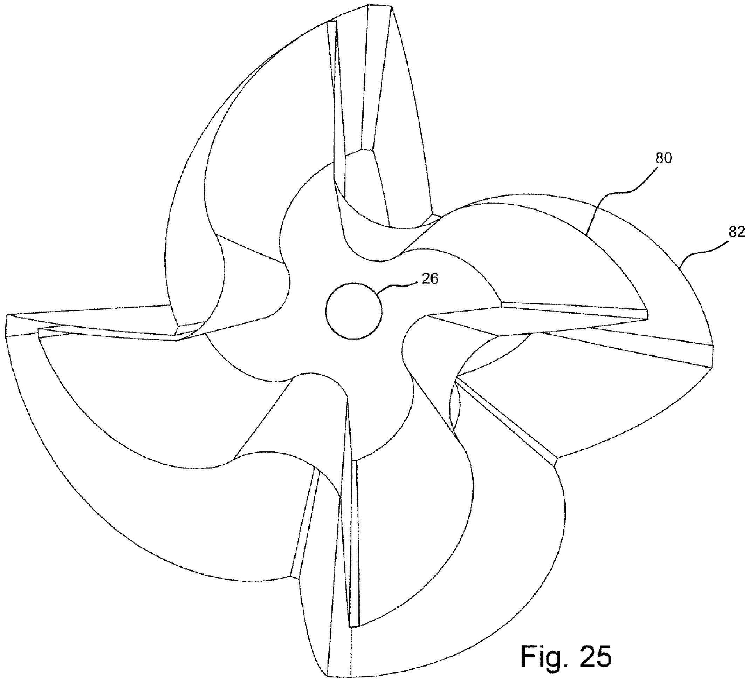

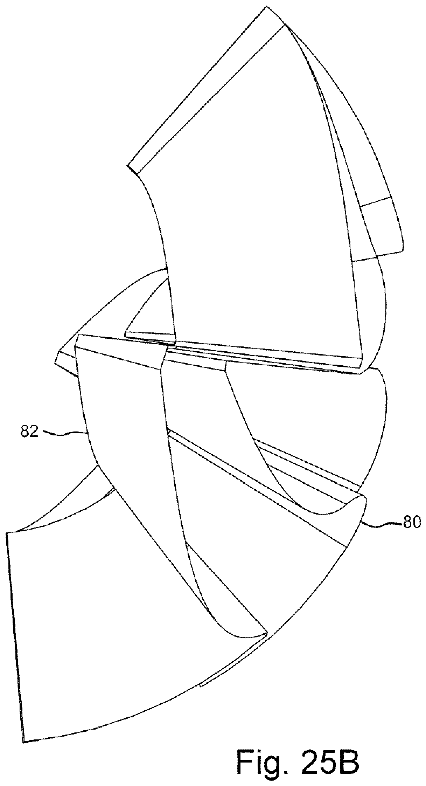

More examples of indexers (or timing gears) utilizing the spherical involute geometry are shown in Figs. 25-29. These Figs. show different embodiments of single direction torque designs of indexing gears 80/82 with 1:1 speed ratios, even though they have different pitch diameters. To maintain the involute gear contacts at the 1:1 speed ratio, the base circle diameters 26 of one gear 80 should be the same as the base circle diameter used to generate the geometry of the second gear 82. For speed ratios that are different than 1:1, the base circles would normally be unequal, and have a ratio equal to the speed ratio required.

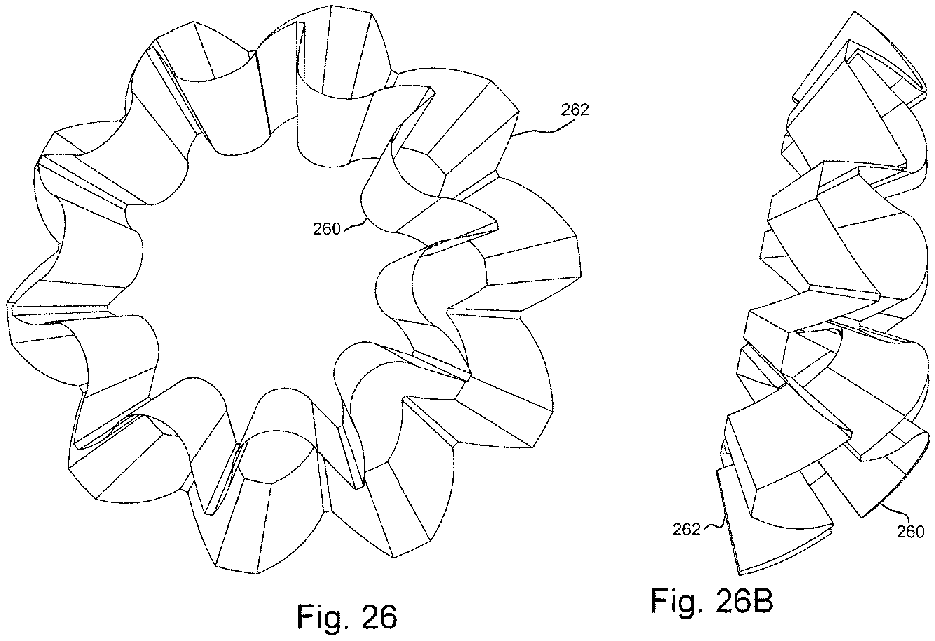

Fig. 26 shows the engagement surfaces of a ten lobe embodiment with 12º beveled gears 260, 262.

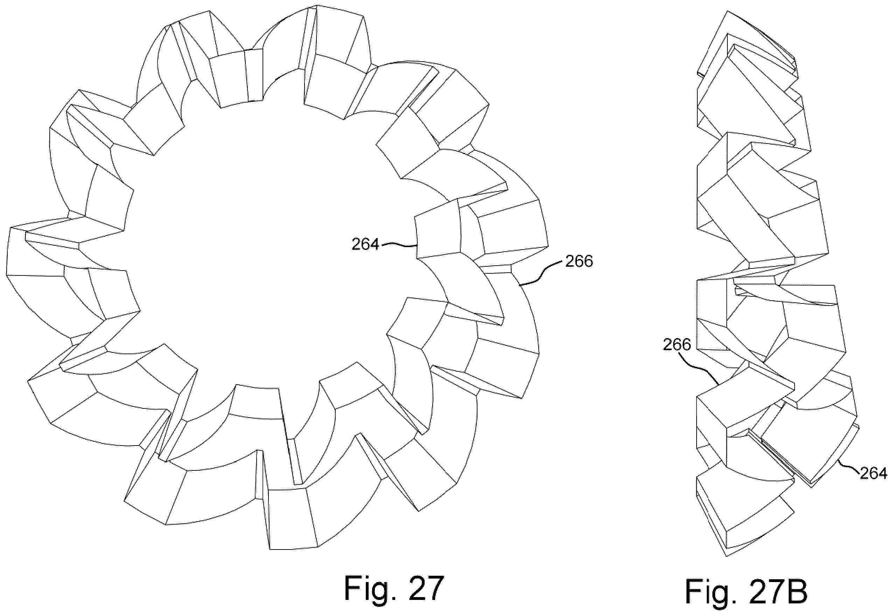

Fig. 27 shows the engagement surfaces of an eleven lobe embodiment with 10º involute gears 264, 266.

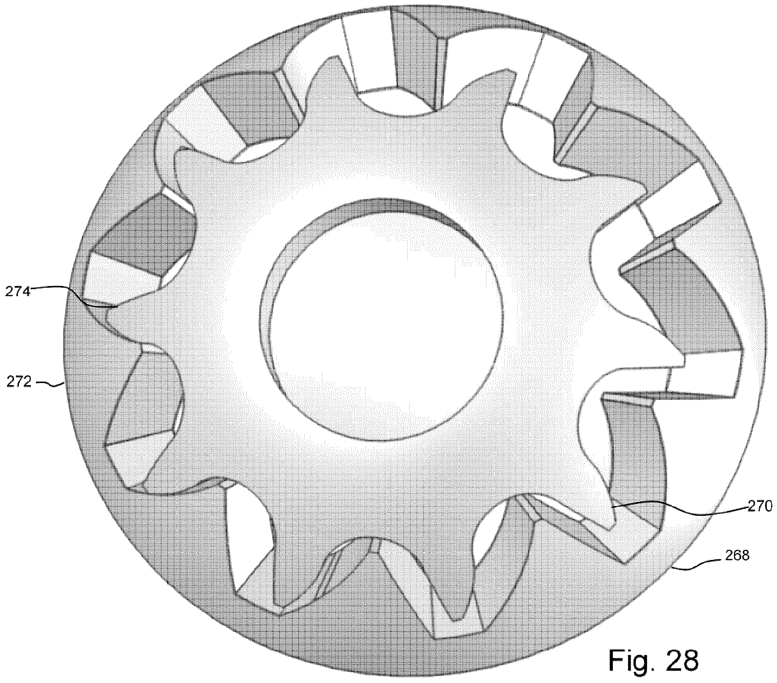

Fig. 28 shows an embodiment with rotors 268, 270 having twelve lobes 272, 274.

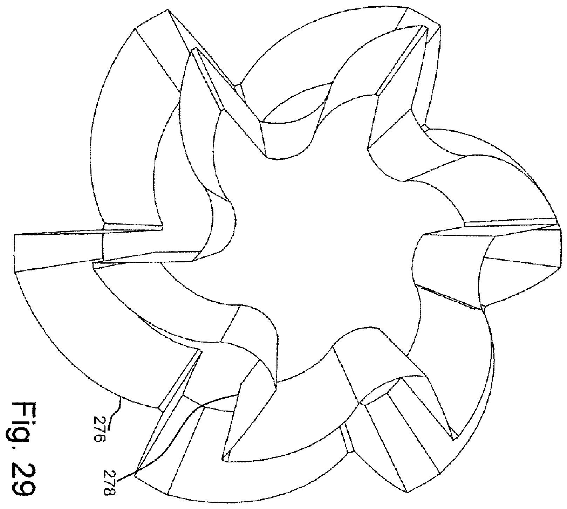

Fig. 29 shows the surfaces 276, 278 of a six-lobed embodiment with wider lobes than that shown in other embodiments.

Figs. 4 and 5 illustrate two rotors intermeshing around the entire circumference of the rotors 84, 86 with each other with axes that (approximately) intersect and are offset from collinear and spin at a 1:1 speed ratio. If one were to imagine an outer shroud, an inner ball, and appropriate porting at the front 216 and rear 218 of the device, with synchronous rotation, the elongated spherical involute surfaces 220, 222 could be used for example for a compressor, or for an expander. The surfaces shown are created by the spherically radial projection of the involutes inward toward the common origin of the spherical plane. The rotors need not be limited by this. For example, one may additionally apply a spiral transformation such as those illustrated in figures Fig. 30 and Fig. 31. In these two figures the intermeshing surfaces 114 are shown as very thin, but in operation they may be given some reasonable thickness.

While the use of a circular base curve has been used above, other shaped evolutes may be utilized. For example, a peanut-shaped base cone may be utilized, resulting in some other kind of involute curve/surface.

**Claims**

1.  A device comprising:

    a. a first rotor (52) and a second rotor (54);
    b. where the axes of the first rotor (52) and the second rotor (54) are offset from collinear and intersecting;
    c. **characterized in that** each of the first and the second rotor (52, 54) comprises:

    i. at least one lobe (178, 180) having a first side and a second side;
    ii. wherein the first side of each lobe is a curved surface (184, 186) formed of at least one spherical involute curve;
    iii. wherein the first sides of the lobes (178) of the first rotor (52) face the first sides of the lobes (180) of the second rotor (54); and
    iv. whereby the lobes (178) of the first rotor (52) intermesh with the lobes (180) of the second rotor (54), around the periphery of the rotors (52, 54).

2.  The device as recited in claim 1 further comprising undercuts (202) in the second surfaces of the lobes (178, 180).

3.  The device as recited in claim 2 wherein the undercut (202) of the lobe is a teardrop shape in cross section to maintain contact or gap with the lobe tip of the opposing rotor (52, 54).

4.  The device as recited in claim 1 wherein the first side of each lobe (178) of the first rotor (52) does not contact the first side of associated lobes (180) on the second rotor (54), such that a clearance gap is maintained between the first side of each lobe (178) of the first rotor (52) and the first side of associated lobes (180) on the second rotor (54).

5.  The device as recited in claim 1 further comprising:

    a. the rotors (52, 54) in a housing (110) having a prescribed gap between an outside diameter of the first rotor (52), and an inside diameter of the housing (110);
    b. the housing (110) having a prescribed gap between an outside diameter of the second rotor (54), and the inside diameter of the housing (110); and
    c. a varying gap between the first sides of the lobes (178) of the first rotor (52) and the first sides of the lobes (180) of the second rotor (54).

6.  The device as recited in claim 5 further comprising:

    a. a shroud (40) encompassing the first rotor (52), and the second rotor (54);
    b. the shroud (40) in contact with the outside diameters of the first rotor (52) and a gap or sealing contact with the second rotor (54);
    c. wherein the shroud (40) rotates with the first and second rotor (54) and
    d. the shroud (40) positioned within the housing (110).

7.  The device as recited in claim 5 further comprising:

    a. a substantially spherical ball (88) centered at the common center of intersection of axis of rotation of the first and second rotors (52, 54); and
    b. a gap between an inner spherical surface of at least one rotor (52, 54) and an outer diameter of the ball (88).

8.  The device as recited in claim 5, where at least one rotor (52, 54) comprises fluid inlet and/or outlet ports that are ported through a face of the rotor (52, 54).

9.  The device as recited in claim 5 where the number of spherical involute derived surfaces is one per lobe (178, 180).

10. The device as recited in claim 5 wherein:

    a. lobe spherical involute curves on each rotor (52, 54) have a helical shape; and
    b. where the helical shape spans around a rotor (52, 54) resulting in fluid movement during rotation of the rotors (52, 54) that is substantially in the axial direction.

**11.** The device as recited in claim 10 wherein:

a. spherical involute lobe surfaces comprise a spiral transformation;
b. wherein the involute curves on respective spherical planes that construct the lobe surfaces radiate outward from a common center; and
c. where each spherical involute on each respective spherical plane is rotated about the rotor axis by a rotation value.

**12.** The device as recited in claim 1 wherein:

a. each of the lobes (178, 180) forms a gear tooth;
b. where one or more teeth of the first rotor (52) are in contact with teeth on the opposing rotor (54) in force transfer so as to transfer torque from the first gear rotor to the opposing gear rotor; and
c. where separate teeth on the first rotor (52) provide for backlash control; and
d. wherein backlash control and torque transfer do not occur on the same tooth of either rotor (52, 54).

**13.** An assembly comprising:

a. a machine comprising a first rotating component and a second rotating component; and
b. the device as recited in claim 12, wherein the device is used as a timing gear between the first rotating component and the second rotating component.

**14.** The device as recited in claim 12, where the gear teeth are formed with a spiral transformation.

**15.** The device as recited in claim 1 wherein:

a. the first rotor (52) having lobes (178) which radiate inward toward a common origin of the spherical plane; and
b. wherein the number of lobes (178) on the first rotor (52) equal the number of lobes (180) on the second rotor (54) resulting in a 1:1 speed ratio between the rotors (52, 54).

**Patentansprüche**

**1.** Vorrichtung, die aufweist:

a. einen ersten Rotor (52) und einen zweiten Rotor (54);
b. wobei die Achse des ersten Rotors (52) und des zweiten Rotors (54) einen Versatz zur Kollinearität aufweisen und sich schneiden
c. **dadurch gekennzeichnet, dass** der erste und zweite Rotor (52, 54) jeweils aufweisen:

i. zumindest einen Nocken (178, 180), der eine erste Seite und eine zweite Seite aufweist;
ii. wobei die erste Seite eines jeden Nockens eine gekrümmte Oberfläche (184, 186) ist, die von zumindest einer sphärischen Evolventenkurve gebildet ist;
iii. wobei die ersten Seiten der Nocken (178) des ersten Rotors (52) den ersten Seiten der Nocken (180) des zweiten Rotors (54) gegenüberliegen; und
iv. wobei die Nocken (178) des ersten Rotors (52) mit den Nocken (180) des zweiten Rotors (54) an der Peripherie der Rotoren (52, 54) verzahnt sind.

**2.** Vorrichtung nach Anspruch 1, die in den zweiten Oberflächen der Nocken (178, 180) ferner Hinterschneidungen (202) aufweist.

**3.** Vorrichtung nach Anspruch 2, wobei die Hinterschneidung (202) des Nockens im Querschnitt eine Tränenform aufweist, um einen Kontakt mit oder einen Abstand zur Nockenspitze des gegenüberliegenden Rotors (52, 54) zu halten.

**4.** Vorrichtung nach Anspruch 1, wobei die erste Seite eines jeden Nockens (178) des ersten Rotors (52) die erste Seite zugeordneter Nocken (180) an dem zweiten Rotor (54) nicht kontaktiert, sodass zwischen der ersten Seite eines jeden Nockens (178) des ersten Rotors (52) und der erste Seite der zugehörigen Nocken (180) an dem zweiten Rotor (54) ein lichter Abstand aufrechterhalten wird.

5. Vorrichtung nach Anspruch 1, die ferner aufweist:

a. die Rotoren (52, 54), die in einem Gehäuse (110) mit einem vorgeschriebenen Abstand zwischen einem Außendurchmesser des ersten Rotors (52) und einem Innendurchmesser des Gehäuses (110) angeordnet sind;
b. das Gehäuse (110), wobei der Innendurchmesser des Gehäuses (110) einen vorgeschriebenen Abstand zum Außendurchmesser des zweiten Rotors (54) aufweist; und
c. einen variierenden Abstand zwischen den ersten Seiten der Nocken (178) des ersten Rotors (52) und den ersten Seiten der Nocken (180) des zweiten Rotors (54).

6. Vorrichtung nach Anspruch 5, die ferner aufweist:

a. eine Umhüllung (40), die den ersten Rotor (52) und den zweiten Rotor (54) umgibt;
b. dass die Umhüllung (40) sich in Kontakt mit den Außendurchmessern des ersten Rotors (52) und in einem Abstand zum oder in dichtendem Kontakt mit dem zweiten Rotor (54) befindet;
c. sich die Umhüllung (40) mit dem ersten und zweiten Rotor (54) dreht; und
d. die Umhüllung (40) innerhalb des Gehäuses (110) angeordnet ist.

7. Vorrichtung nach Anspruch 5, die ferner aufweist:

a. eine im Wesentlichen sphärische Kugel (88), die an dem gemeinsamen Zentrum des Schnittpunktes der Drehachsen des ersten und zweiten Rotors (52, 54) zentriert ist; und
b. einen Abstand zwischen einer inneren sphärischen Oberfläche von zumindest einem Rotor (52, 54) und einem Außendurchmesser der Kugel (88).

8. Vorrichtung nach Anspruch 5, wobei zumindest ein Rotor (52, 54) Fluideinlass- und/oder Fluidauslassöffnungen aufweist, die durch eine Stirnfläche des Rotors (52, 54) führen.

9. Vorrichtung nach Anspruch 5, wobei die Anzahl der aus sphärischen Evolventen abgeleiteten Oberflächen pro Nocken (178, 180) eins ist.

10. Vorrichtung nach Anspruch 5, wobei:

a. die sphärischen Nockenevolventenkurven an jedem Rotor (52, 54) eine wendelförmige Form aufweisen; und
b. die sich um einen Rotor (52, 54) erstreckende wendelförmige Form während einer Rotation der Rotoren (52, 54) zu einer im Wesentlichen axialen Richtung verlaufenden Fluidbewegung führt.

11. Vorrichtung nach Anspruch 10, wobei:

a. sphärische Nockenevolventenkurven eine Spiraltransformation aufweisen;
b. die Evolventenkurven an den jeweiligen sphärischen Ebenen, die die Nockenoberflächen ausbilden, von einem gemeinsamen Zentrum nach außen gerichtet sind; und
c. jede sphärische Evolvente an der jeweiligen sphärischen Ebene um einen Rotationswert um die Rotorachse gedreht ist.

12. Vorrichtung nach Anspruch 1, wobei:

a. jeder der Nocken (178, 180) einen Verzahnungszahn ausbildet;
b. ein oder mehrere Zähne des ersten Rotors (52) bei einer Kraftübertragung Zähne an dem gegenüberliegenden Rotor (54) kontaktieren, sodass ein Drehmoment von dem ersten Verzahnungsrotor auf den gegenüberliegenden Verzahnungsrotor übertragen wird; und
c. gesonderte Zähne an dem ersten Rotor (52) für eine spielfreie Steuerung sorgen; und
d. die spielfreie Steuerung und die Drehmomentübertragung bei beiden Rotoren (52, 54) nicht an demselben Zahn erfolgt.

13. Baugruppe, die aufweist:

a. eine Maschine, die eine erste rotierende Komponente und eine zweite rotierende Komponente aufweist; und
b. eine Vorrichtung nach Anspruch 12, wobei die Vorrichtung als Steuergetriebe zwischen der ersten rotierenden Komponente und der zweiten rotierenden Komponente verwendet wird.

**14.** Vorrichtung nach Anspruch 12, wobei die Verzahnungszähne mit einer Spiraltransformation ausgebildet sind.

**15.** Vorrichtung nach Anspruch 1, wobei:

a. der erste Rotor (52) Nocken (178) aufweist, die nach innen zu einem gemeinsamen Ursprung der sphärischen Ebene gerichtet sind; und
b. die Anzahl der Nocken (178) an dem ersten Rotor (52) gleich der Anzahl der Nocken (180) an dem zweiten Rotor (54) ist, woraus ein Drehzahlverhältnis zwischen den Rotoren (52, 54) von 1 : 1 resultiert.

**Revendications**

**1.** Dispositif comprenant :

a. un premier rotor (52) et un second rotor (54) ;
b. à l'endroit où les axes du premier rotor (52) et du second rotor (54) sont décalés par rapport à une disposition colinéaire et d'intersection ;
c. **caractérisé en ce que** chacun parmi le premier et le second rotor (52, 54) comprend :

i. au moins un lobe (178, 180) ayant un premier côté et un second côté ;
ii. dans lequel le premier côté de chaque lobe est une surface incurvée (184, 186) formée avec au moins une courbe involutée sphérique ;
iii. dans lequel les premiers côtés des lobes (178) du premier rotor (52) font face aux premiers côtés des lobes (180) du second rotor (54) ; et
iv. moyennant quoi les lobes (178) du premier rotor (52) s'engrènent avec les lobes (180) du second rotor (54), autour de la périphérie des rotors (52, 54).

**2.** Dispositif selon la revendication 1, comprenant en outre des dégagements (202) dans les secondes surfaces des lobes (178, 180).

**3.** Dispositif selon la revendication 2, dans lequel le dégagement (202) du lobe a une forme de larme, en coupe, pour maintenir le contact ou un espace avec la pointe de lobe du rotor (52, 54) opposé.

**4.** Dispositif selon la revendication 1, dans lequel le premier côté de chaque lobe (178) du premier rotor (52) n'est pas en contact avec le premier côté des lobes (180) associés sur le second rotor (54), de sorte qu'un espace de jeu est maintenu entre le premier côté de chaque lobe (178) du premier rotor (52) et le premier côté des lobes associés (180) sur le second rotor (54).

**5.** Dispositif selon la revendication 1, comprenant en outre :

a. les rotors (52, 54) dans un boîtier (110) ayant un espace prédéterminé entre un diamètre externe du premier rotor (52) et un diamètre interne du boîtier (110) ;
b. le boîtier (110) ayant un espace prédéterminé entre un diamètre externe du second rotor (54) et le diamètre interne du boîtier (110) ; et
c. un espace variable entre les premiers côtés des lobes (178) du premier rotor (52) et les premiers côtés des lobes (180) du second rotor (54).

**6.** Dispositif selon la revendication 5, comprenant en outre :

a. un flasque (40) englobant le premier rotor (52) et le second rotor (54) ;
b. le flasque (40) étant en contact avec les diamètres externes du premier rotor (52) et un espace ou contact d'étanchéité avec le second rotor (54) ;
c. dans lequel le flasque (40) tourne avec le premier et le second rotor (54), et
d. le flasque (40) positionné à l'intérieur du boîtier (110).

**7.** Dispositif selon la revendication 5, comprenant en outre :

    a. une bille sensiblement sphérique (88) centrée au niveau du centre commun d'intersection de l'axe de rotation des premier et second rotors (52, 54) ; et
    b. un espace entre une surface sphérique interne d'au moins un rotor (52, 54) et un diamètre externe de la bille (88).

**8.** Dispositif selon la revendication 5, dans lequel au moins un rotor (52, 54) comprend des orifices d'entrée et/ou de sortie de fluide qui sont perforés à travers une face du rotor (52, 54).

**9.** Dispositif selon la revendication 5, dans lequel le nombre de surfaces dérivées involutées sphériques est d'un par lobe (178, 180).

**10.** Dispositif selon la revendication 5, dans lequel :

    a. les courbes involutées sphériques sur chaque rotor (52, 54) ont une forme hélicoïdale ; et
    b. dans lequel la forme hélicoïdale s'étend autour d'un rotor (52, 54) se traduisant par le mouvement de fluide pendant la rotation des rotors (52, 54), qui est sensiblement dans la direction axiale.

**11.** Dispositif selon la revendication 10, dans lequel :

    a. les surfaces de lobe involutées sphériques comprennent une transformation en spirale ;
    b. dans lequel les courbes involutées sur des plans sphériques respectifs qui construisent les surfaces de lobe rayonnent vers l'extérieur à partir d'un centre commun ; et
    c. dans lequel chaque volute sphérique sur chaque plan sphérique respectif est entraînée en rotation autour de l'axe de rotor selon une valeur de rotation.

**12.** Dispositif selon la revendication 1, dans lequel :

    a. chacun des lobes (178, 180) forme une dent d'engrenage ;
    b. dans lequel une ou plusieurs dents du premier rotor (52) sont en contact avec des dents sur le rotor (54) opposé en transfert de force afin de transférer le couple du premier rotor denté au rotor denté opposé ; et
    c. dans lequel les dents séparées sur le premier rotor (52) fournissent le contrôle de jeu ; et
    d. dans lequel le contrôle de jeu et le transfert de couple n'ont pas lieu sur la même dent de chacun des rotors (52, 54).

**13.** Ensemble comprenant :

    a. une machine comprenant un premier composant rotatif et un second composant rotatif ; et
    b. le dispositif selon la revendication 12, dans lequel le dispositif est utilisé en tant que pignon de distribution entre le premier composant rotatif et le second composant rotatif.

**14.** Dispositif selon la revendication 12, dans lequel les dents d'engrenage sont formées avec une transformation en spirale.

**15.** Dispositif selon la revendication 1, dans lequel :

    a. le premier rotor (52) ayant des lobes (178) qui rayonnent vers l'intérieur vers une origine commune du plan sphérique ; et
    b. dans lequel le nombre de lobes (178) sur le premier rotor (52) égal au nombre de lobes (180) sur le second rotor (54) se traduisant par un rapport de vitesse de 1 :1 entre les rotors (52, 54).

Fig. 1

Fig. 2

Fig. 3

Fig. 4

EP 2 699 821 B1

Fig. 5

Fig. 6

EP 2 699 821 B1

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 19B

Fig. 20

208

210

210
208

Fig. 21

Fig. 22B

Fig. 22

EP 2 699 821 B1

Fig. 23

Fig. 24B

Fig. 24

EP 2 699 821 B1

Fig. 25

26

80

82

82

80

Fig. 25B

Fig. 26

260

262

Fig. 26B

262

260

Fig. 27

264

266

Fig. 27B

266

264

Fig. 28

Fig. 29

Fig. 30

Fig. 31

PA27
PA26
PA29

Fig. 32
Prior Art

Fig. 33

202

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010074786 A1
- US 12560674 B
- US 13162436 B
- US 6036463 A